# EUROPEAN PATENT APPLICATION

(11) **EP 1 894 773 A1**
(43) Date of publication of application: **05.03.2008**
(21) Application number: 06119989.9
(22) Date of filing: 01.09.2006
(51) Int. Cl.: B60P 3/14

(54) **Module system for service vehicles**

(71) Applicant: Modul-System HH AB, 431 22 Mölndal (SE)
(72) Inventor: Carlsson, Anders, 442 50 Hisings Backa (SE); Axelsson, Torbjörn, 434 96 Kungsbacka (SE)
(74) Representative: Edlund, Fabian

(57) **Abstract**

The invention discloses a module system (1), for a cargo or a back space in an automotive vehicle (10), comprising at least one module unit (20) containing for example work equipment, said module system (1) being placed along the longitudinal direction of the vehicle (10), wherein at a first side portion of the module system (1) a first fastener is arranged and at a second side portion of said module system a second fastener is arranged, said fasteners arranging the module system to the wall of the vehicle (10). A rail (52) is positioned by said wall along the longitudinal direction of the vehicle (10) and comprises fastening zones (64) for the module system (1). The rail (52) is formed for variable positioning of at least three fasteners (59a, 59b, 59c) for distribution of module system loading along said rail (52) .

## Description

### Technical field

The present invention relates to a module system, for a cargo or a back space in an automotive vehicle, comprising at least one module unit, containing for example work equipment, said module unit being placed along the longitudinal direction of the vehicle, wherein at a first side portion of the module system is a first fastener arranged and at a second side portion of said module system is a second fastener arranged, said fasteners arranging the module system to the wall of the vehicle.

### Background of the invention

It is common practise in the art of service vehicles to equip a cargo space or a back space of an automotive vehicle with for example cupboards, tool holders, shelves or other module units. This is usually made in a separate step after the vehicle have been manufactured, i.e. the equipping of the vehicle in question is made separately from the manufacturing. Before the vehicle is equipped with specialised equipment, usually the cargo space of the vehicle is provided with an inner floor, usually made of wood, but the floor might also be made of for example an artificial, plastic material. This floor functions as a good support to work, stand and walk upon and is also used as an anchor plate for the module unit.

The module system is often also at least partly attached to the wall and the purpose is to counteract that the unit tip for example in a turn. It is common practise to secure the module unit/units to the wall with two fasteners, with screws or the like penetrating said vehicle wall, one fastener being positioned on the first side portion of the module unit and one fastener on the other side portion of same module unit. However, there is a risk during acceleration or retardation of the vehicle, that the module system, or maybe one module unit thereof, can break away which may cause damages. The module units, in particular when they are equipped with tools and material which are included in a toolkit, are usually rather heavy and may in such case present a potential safety risk. During retardation of the vehicle the module system may, if not securely attached, move forward with a large force and which in a serious scenario may break through into the driver cabin and thereby even cause personal injuries. Therefore, an improved arrangement for safe fastening of the module unit is needed.

W02006057596, of the present applicant, discloses a fastening device for working equipment in a vehicle, which comprises a fastenings device further comprising a floor bracket plate, provided with fixation points.

One issue related to securing the module units to the wall of the vehicle is that it is not that flexible when it comes to changing/moving the module units. In addition it is often considered a problem that such installations leave open holes where the module system has been attached to the vehicle.

The ever increasing demand on flexible and quick installation of module systems calls for a new solution. Usually, the customer wants to change the working equipment, depending on what kind of work he/she has to do. So instead of replacing equipment one by one, it is desirable that a whole module unit could be changed, which saves time and the customer will always know that he/she has the right equipment with him.

DE202005007189U presents a unit which is fixed to the wall with detachable quick locking mechanism in a loading space. The unit has a bracket element with a locking element. On the wall is a lockable counterpart arranged. The solution may be difficult to adopt to module systems comprising module units of various sizes.

Hence, it is still an issue to present an improved module system which is quickly installed, safe and yet flexible in order to enable securing various sizes and different shapes of module units.

### Summary of the invention

In view of the above, an objective of the invention is to solve or at least reduce the problems discussed above. Hence, the invention according to claim 1 discloses a module system, for a cargo or a back space in an automotive vehicle, comprising at least one module unit containing for example work equipment, said module system being placed along the longitudinal direction of the vehicle, wherein at a first side portion of the module system a first fastener is arranged and at a second side portion of said module system a second fastener is arranged, said fasteners arranging the module system to the wall of the vehicle and a rail is positioned by said wall along the longitudinal direction of the vehicle comprising fastening zones for the module system, said rail being formed for variable positioning of at least three fasteners for distribution of module system loading along said rail. Thus, the module system, once installed, is arranged fixed to the service vehicle.
An arrangement according to the module system will thus increase the ability to retain the module units even at great stress forces and at the same time increase the flexibility of arranging different kind of module units to the wall in an easy and fast way. Usually, a row of module units, is formed by placing modules next to one another in the longitudinal direction of the vehicle and they are then fixed to the floor and the wall with respective two fastening devices. It is realized that module units may encompass many types of cupboards, tool holders, shelves, rack systems or other module units. The solution will spread out the forces, in case of any impact, through fastening zones over the whole row of module units or e.g. one large unit instead of just one point at each side portions. The solution is based on that a rail is arranged to the wall along the longitudinal direction of the vehicle and the rail has fastening zones on which fasteners can be arranged. In this way the stress forces can be spread from being rather at two points to be distributed over the entire rail.
The rail which is fixated on the wall is preferably made of metal and is preferably formed from a metal sheet or through extrusion. The rail has at least one undercut channel which comprise the fastening zone for the module unit, wherein holes with a defined diameter and at a defined distance are arranged. These holes give the possibility to screw the rail to the wall, the rail can also be fastened with a double-stick tape.
Preferably, one additional fastening zone is arranged between a first and a second fastening zone of the side portions of the module unit. The possibility to perform easy installation together and yet providing improved fastening has been an issue during long time and hence the stepless manoeuvrability of the fasteners, which at the same time may easily attached to said module units provides for improved safety.
Advantageously, the wall rail has at least one undercut channel for enabling the stepless manoeuvrability. More preferably, the wall rail has three undercut channels.
Suitably, the fastening zones comprises a fastener, which is arranged to the rail, preferably through joint connection elements. The rail is adapted for complementary engagement with a fastener. According to a preferred embodiment the fastener is of quick-fastening type.

Furthermore, according to a preferred embodiment of the invnetion the fastener is a bracket with at least a part propagating in a perpendicular direction in relation to said rail.
Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. Other objectives, features and advantages of the present invention will appear from the following detailed disclosure, from the attached dependent claims as well as from the drawings.

### Brief description of the drawings

Currently preferred embodiments of the present invention will now be described in more detail with reference to the accompanying drawings, wherein:
Fig. 1 discloses an open-up perspective view of a service vehicle comprising a module system according to the invention.
Fig. 2 discloses an enlarged partial perspective view of the cut out II in fig. 1
Fig. 3. discloses an enlarged partial perspective view of the cut out III in fig. 1
Fig. 4a discloses a rail according to a first embodiment.
Fig. 4b discloses a rail according to a second embodiment.
Fig. 5 discloses an enlarged partial perspective view of the cut-out V in fig. 1 (without module units)
Fig. 6 disclosure a module system according to a second aspect of the invention as seen in perspective from behind.

### Detailed description of preferred embodiments

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:

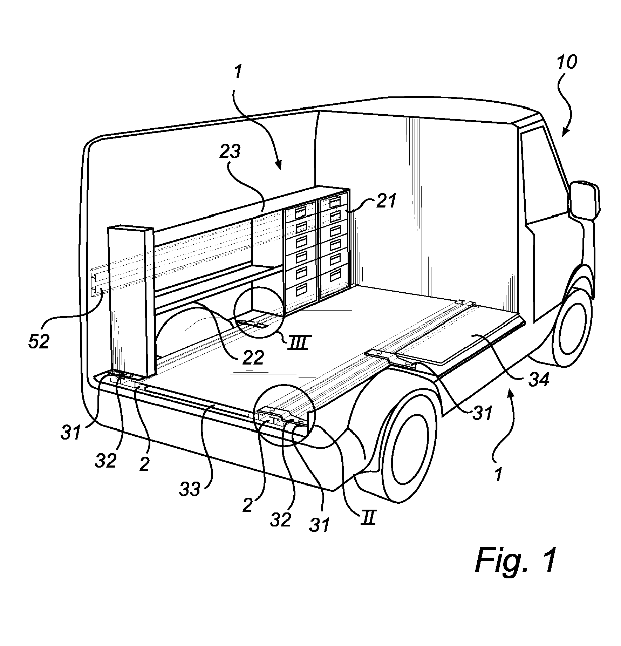

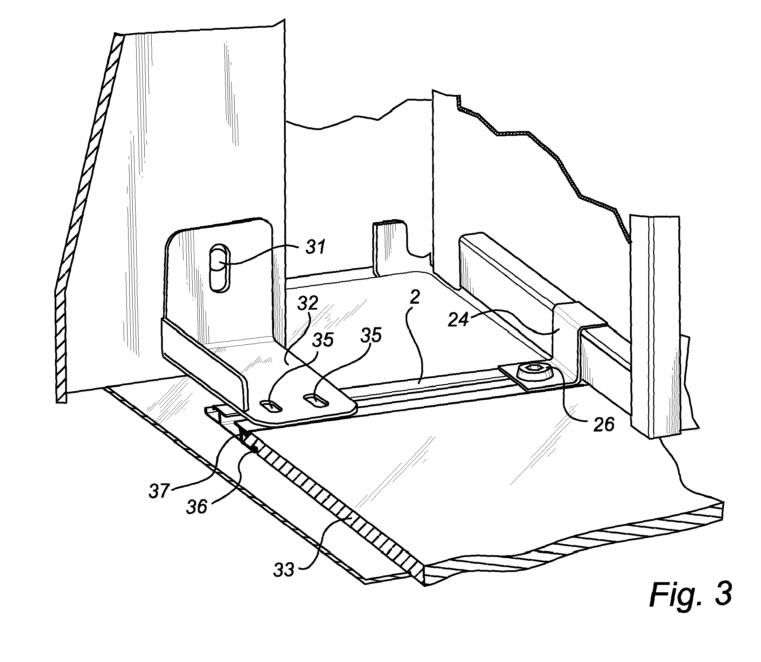

Fig. 1 shows a module system 1 for a cargo or a back space in a automotive vehicle, for example a service vehicle 10. Module units 20, which can be a drawer unit 23 containing for example drawers 21 or shelves 22, are placed and fixated (more clearly shown in Fig. 3) on an already installed inner floor construction. he floor construction contains a floor section 33 with a rail 2 arranged on two opposite sides of the floor section 33. The floor section 33 is fixed to the rails 2. The rails are fixed to the service vehicle by fixing means 32 to the ring fasteners 31. This arrangement provides for that the inner floor construction can be arranged to the ordinary floor without being damaged through holes or other interferences. A rail 52 is positioned along the longitudinal direction of the vehicle. Advantageously, it has the same shape as the rail 2, which is arranged in the floor construction. As the floor construction preferable is used in the middle section of the vehicle (in between the rails) can a levelling section 34 for the free spaces be arranged on the rail 2.

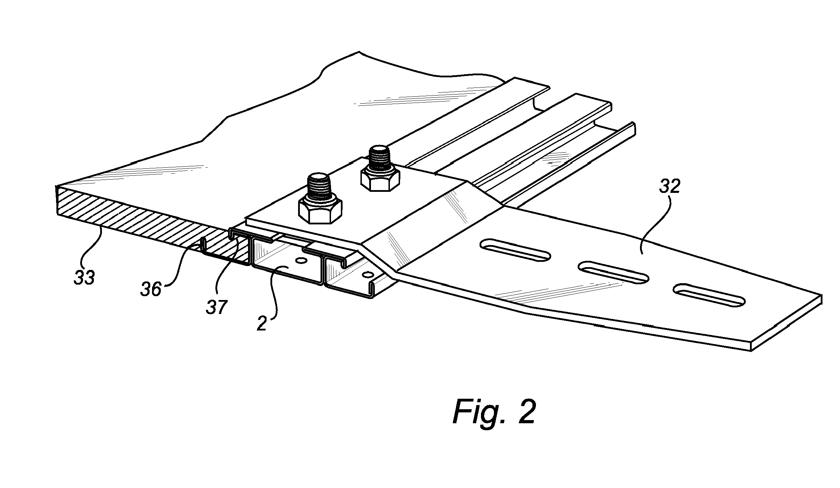

Fig 2. shows a section of a preferred floor construction in detail in a perspective view. The floor section 33 shows a first groove 36 and a second groove 37. The rail 2 and floor section 33 with its grooves 36, 37 is so designed that they match into each other. On the rail 2 a fixing means 32 is arranged, which is used to fixate the floor construction to the vehicle. The fixing means 32 can have other designs, besides what is shown in the preferred embodiments.
Fig. 3 shows another section of a preferred floor construction as described in Fig. 2 with a different kind of fixing means. The fixing means 32 has two fixing element holes 35 through which said fixing means can be fixated to the rail 2 and it also shows a hole through which the whole floor construction may be fixed to the ring fastener in the vehicle. It also shows a fastening bracket 2 which arrange the module unit through a rail fastening means 26 to the rail 2.

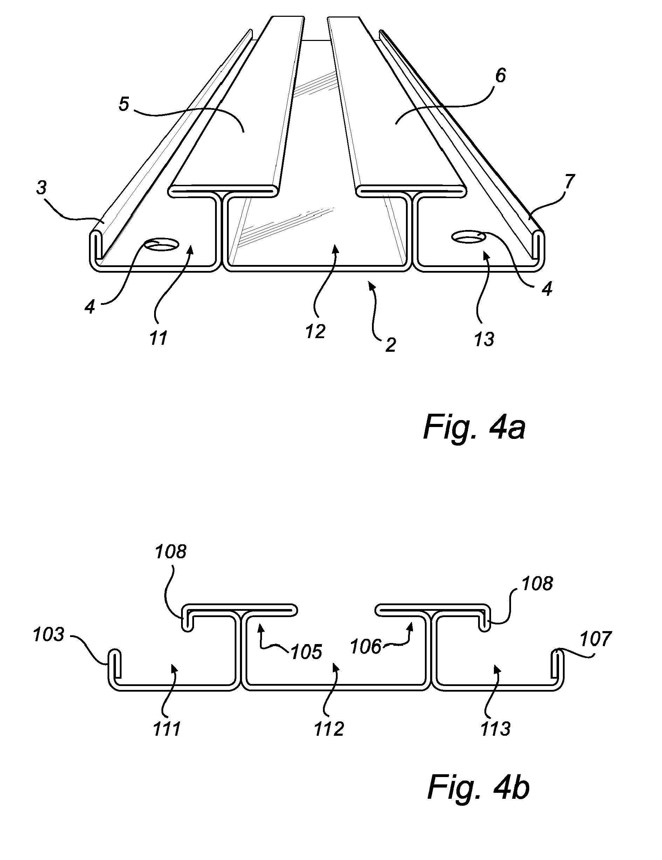

Fig. 4a shows the rail 2 in a perspective way with one kind of profile. This profile is made out of a sheet metal by e.g. roll forming but can also be an extruded profile. The rail 2 contains out of three rail sections, a first rail section 11, a second rail section 12 and a third rail section 13. Between these sections is a first undercut profile 5 and a second undercut profile 6. The first rail section 11 has on its left side an first flange 3 and the third rail section has on it left side an second flange 7. The first and the third rail section 11, 13 together with its respective first and second undercut profile 5, 6 and its first and second flange 3, 7 create the space, with which the floor section interacts. In the first and third rail section 11, 13 are also two holes 4 shown. These are used to secure the rail 2, 52 for example to a wall through screws or other fixating means.
Fig. 4b shows a slightly different profile. This profile can also be made out of a sheet metal or an extruded profile. The rail contains three rail sections, a first rail section 111, a second rail section 112 and a third rail section 113. Between these sections is a first undercut profile 105 and a second undercut profile 106. On the outer edges of the first and second under cut section 105, 106 is a profile edge 108 downwardly directed. This makes the interaction with the floor section 33 better. The first rail section 11 has on its left side a first flange 103 and the third rail section has on it left side a second flange 107.

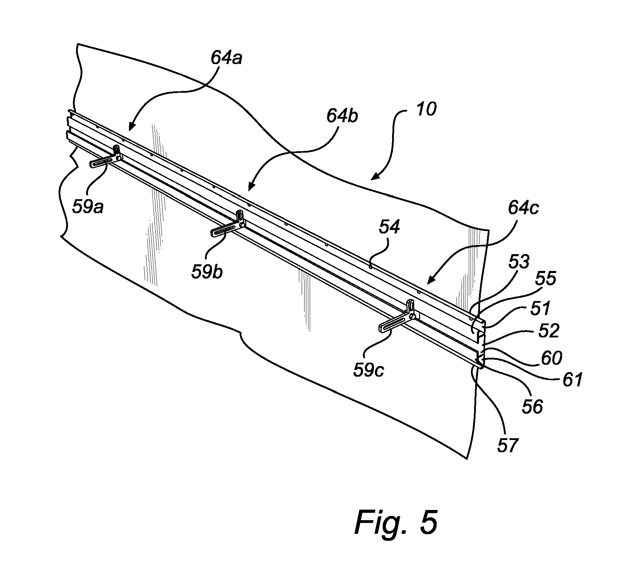

Fig. 5 shows a rail 52 which contains of three rail sections, a first rail section 51, a second rail section 60 and a third rail section 61. Between these sections is a first undercut profile 55 and a second undercut profile 56. The first rail 51 has on its upward side an first flange 53 and the third rail section 61 has on it downward side a second flange 57. Between the first undercut profile 55 and the second undercut profile 56 wall brackets are arranged 59a, 59b and 59c, for being manoeuvrable along the rail 52.

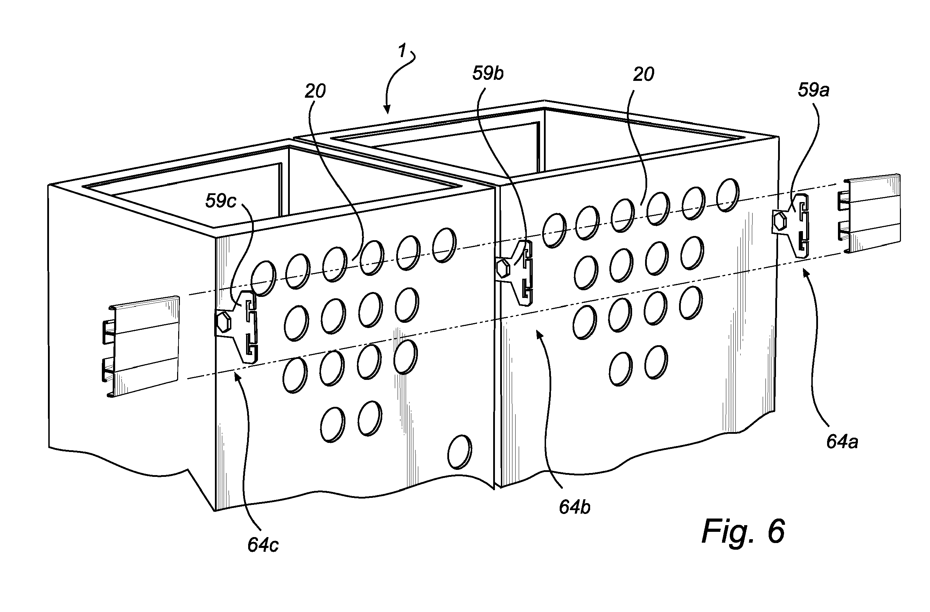

Fig 6. shows a module system with module units 20 with attached wall-brackets 59a, 59b and 59c as seen from behind. The brackets are then introduced to the rail 52 at an open end and the module units are installed in a suitable position by fixing brackets to the floor after. As an option the units are positioned one by one against prearranged brackets in the rail 52 for accomplishing a fastening zone. The skilled person realises that there are also other ways utilizing the flexibility of the invention depending on the actual module unit to be installed.
The invention has mainly been described above with reference to a some embodiments. However, as is readily appreciated by a person skilled in the art, other embodiments than the ones disclosed above are equally possible within the scope of the invention, as defined by the appended patent claims.

## Claims

1. Module system (1), for a cargo or a back space in an automotive vehicle (10), comprising at least one module unit (20) containing for example work equipment, said module system (1) being placed along the longitudinal direction of the vehicle (10), wherein at a first side portion of the module system (1) a first fastener is arranged and at a second side portion of said module system a second fastener is arranged, said fasteners arranging the module system to the wall of the vehicle (10),
**characterised in that** a rail (52) is positioned by said wall along the longitudinal direction of the vehicle (10) and comprises fastening zones (64) for the module system (1), said rail (52) being formed for variable positioning of at least three fasteners (59a, 59b, 59c) for distribution of module system loading along said rail (52).

2. Module system (1) according to claim 1, wherein at least one additional fastening zone (64b) is positioned between a first (64a) and a second (64c) fastening zone of the side portions of the module system (1).

3. Module system (1) according to any one of claims 1-2, wherein the rail (52) is made of metal.

4. Module system (1) according to any one of claims 1-3, wherein the rail (52) has at least one undercut profile (5; 6, 55; 56, 105; 106).

5. Module system (1) according to any one of claims 1-4, wherein the rail (52) has three rail section (11, 12, 13; 51, 60, 61; 111, 112, 113) .

6. Module system (1) according to any one of claims 1-5, wherein the rail (52) has holes (4, 54) evenly distributed along it's length.

7. Module system (1) according to any one of claims 1-6, wherein the fastening zones (64) comprises a fastener (59), which is arranged to the rail (52), preferably through joint connecting elements.

8. Module system (1) according to any one of claims 1-7, wherein the rail (52) is adapted for complementary engagement with a fastener through rail sections (11, 12, 13; 51, 60, 61; 111, 112, 113).

9. Module system (1) according to any one of claims 1-8, wherein the fastener (59) is of quick-fastening type.

10. Module system (1) according to any one of claims 1-9, wherein the fastener (59) is a bracket with at least a part propagating in a perpendicular direction in relation to said rail (52).
